# EUROPEAN PATENT APPLICATION

(11) **EP 4 614 683 A1**
(43) Date of publication of application: **10.09.2025**
(21) Application number: 23933697.7
(22) Date of filing: 08.09.2023
(51) Int. Cl.: H01M 50/103, H01M 50/15, H01M 10/48, H01M 50/249, H01M 50/209

(54) **BATTERY CELL, BATTERY AND ELECTRIC DEVICE**

(30) Priority: 18.04.2023 CN 202320874564 U
(71) Applicant: Contemporary Amperex Technology Co., Limited, Ningde, Fujian 352100 (CN)
(72) Inventor: CHEN, Long, Ningde, Fujian 352100 (CN); ZHANG, Jijun, Ningde, Fujian 352100 (CN); CHA, Xinggui, Ningde, Fujian 352100 (CN); LUO, Hao, Ningde, Fujian 352100 (CN); ZHENG, Yulian, Ningde, Fujian 352100 (CN); WANG, Peng, Ningde, Fujian 352100 (CN)
(74) Representative: Ran, Handong
(86) International application number: PCT/CN2023/117768
(87) International publication number: WO 2024/216826

(57) **Abstract**

A battery cell, a battery and an electrical device. The battery cell includes a shell, an electrode assembly and a detection sensor. The shell includes a wall portion, the wall portion being provided with a mounting hole in communication with inside and outside of the shell. The electrode assembly is accommodated inside the shell. The detection sensor includes a sampling module and an encapsulation housing configured to encapsulate the sampling module. At least part of the encapsulation housing is inserted into the mounting hole and blocks the mounting hole. The sampling module is configured to sample an environment inside the shell. In the above manner, the overall volume of the battery cell can be reduced, thereby facilitating the improvement of the volumetric energy density.

## Description

### TECHNICAL FIELD

The present application relates to the field of battery technologies, and in particular, to a battery cell, a battery, and an electrical device.

### BACKGROUND

With the development of battery technologies, battery cells are being used in more and more fields, and are gradually replacing conventional fossil energy sources in the field of vehicle power. The battery cell can store chemical energy and convert the chemical energy into electrical energy in a controlled manner. In rechargeable battery cells, an active material can be activated by charging for continued use after the battery cells have been discharged.

Generally, the battery cell may include an electrode assembly, electrode terminal posts, and a shell. The shell can accommodate the electrode assembly. The electrode assembly is electrically connected to an external device via the electrode terminal posts. In the structure of an existing battery cell, the space inside the shell is limited and compact. To ensure a relatively high volumetric energy density, larger or more electrode assemblies need to be placed in the limited space inside the shell, making it difficult to place other components and therefore difficult to obtain environment information inside the shell, hindering the effective management of the operating state of the battery cell is limited.

### SUMMARY

In view of the above problem, the present application provides a battery cell, a battery, and an electrical device, such that the overall volume of the battery cell can be reduced, thereby facilitating the improvement of the volumetric energy density of the battery cell.

In a first aspect, the present application provides a battery cell. The battery cell includes a shell, an electrode assembly, and a detection sensor. The shell includes a wall portion, the wall portion being provided with a mounting hole in communication with inside and outside of the shell. The electrode assembly is accommodated inside the shell. The detection sensor includes a sampling module and an encapsulation housing configured to encapsulate the sampling module, and at least part of the encapsulation housing being inserted into the mounting hole and blocking the mounting hole. The sampling module is configured to sample an environment inside the shell.

In the above manner, at least a part of the encapsulation housing is inserted into the mounting hole, and occupies space of the wall portion, thereby reducing the space occupation inside the shell or outside the shell, facilitating the reduction of the overall volume and space occupation of the battery cell. In addition, since the space occupied by the detection sensor in the inside of the shell can be reduced, more space can be provided for accommodating the electrode assembly inside the shell, thereby improving the space utilization of the inside of the shell. Therefore, the volumetric energy density of the battery cell is increased, and the structure of the battery cell is more compact. On the other hand, by providing the detection sensor at least partially outside the shell or in the mounting hole, a spacing distance between the sampling module and the electrode assembly can be increased, such that the probability of corrosion of the sampling module by the electrode assembly is reduced, and the risk of a short circuit caused by contact between the sampling module and the electrode assembly is reduced.

In some embodiments, the encapsulation housing is provided with a through-hole on a side facing the inside of the shell, and at least a part of the sampling module is exposed through the through-hole, to sample the environment inside the shell.

In the above manner, on the one hand, the sampling module can obtain environment information inside the shell through the through-hole, to effectively sample the environment inside the shell, thereby facilitating the management of the operating state of the battery cell by an external system. On the other hand, providing the through-hole reduces the exposed area of the sampling module, such that the sampling module is effectively protected by the encapsulation housing, thereby reducing the probability that the sampling module is damaged or corroded, and thus improving the operating stability of the battery cell.

In some embodiments, the mounting hole includes a first hole section and a second hole section in communication with each other, the first hole section being closer to the inside of the shell than the second hole section, and a support table surface facing the second hole section being formed at the connection between the first hole section and the second hole section. At least a part of the encapsulation housing is provided at the second hole section and supported by the support table surface.

In the above manner, the support table surface can restrict the encapsulation housing from moving toward the inside of the shell, such that a distance between the support table surface and the electrode assembly is stable, thereby reducing the probability of being short-circuited or a short circuit occurring between the two. In addition, the second hole section can restrict a movement range of the encapsulation housing along a radial direction of the mounting hole, thereby facilitating mounting of the encapsulation housing.

In some embodiments, the encapsulation housing includes an insertion portion and a flange portion protruding from an outer periphery of the insertion portion, the flange portion being supported by the support table surface, and at least a part of the insertion portion being inserted into the first hole section.

In the above manner, the support table surface can restrict the movement of the flange portion toward the inside of the shell, the second hole section can restrict the movement range of the flange portion along a radial direction of the mounting hole, and the first hole section can restrict the movement range of the insertion portion along a radial direction of the mounting hole, thereby facilitating mounting of the encapsulation housing.

In some embodiments, the battery cell includes an isolating cover, the isolating cover being located on a side of the wall portion facing the inside of the shell, provided with an isolating space and a through-going hole, the isolating cover and covering a periphery of the mounting hole, the isolating space and the mounting hole being provided opposite to and in communication with each other, and the through-going hole being in communication with the isolating space and the inside of the shell.

In the above manner, the isolating cover separates the sampling module from the electrode assembly, to reduce the risk of short circuit of the detection sensor due to the contact with the electrode assembly, and further reduce the corrosion damage to the sampling module from the electrode assembly and corrosion damage to the sampling module from the electrolyte.

In some embodiments, the isolating cover is fixedly connected to the wall portion. Alternatively, the battery cell includes a plastic part, and the plastic part is provided on a side of the wall portion facing the inside of the shell. The isolating cover is fixedly connected to the plastic part.

In the above manner, the isolating cover is fixedly connected to the wall portion, to reduce the risk of destroying the positional relationship between the isolating cover and the wall portion, improve the stability of the connection between the isolating cover and the wall portion, and effectively perform a function of protecting the sampling module by the isolating cover. The isolating cover is provided to be fixedly connected to the plastic part, such that the wall portion and the electrode assembly are effectively separated, thereby reducing the impact of the electrode assembly and the electrolyte on the wall portion and components (such as the circuit board and the sampling module) on the wall portion, protecting the wall portion better, and facilitating assembly of the isolating cover.

In some embodiments, the through-going hole runs through a bottom of the isolating cover and is provided opposite to the sampling module. And/or, a plurality of the through-going holes are provided, and the plurality of the through-going holes are arranged at intervals.

In the above manner, by providing the through-going hole opposite to the sampling module, the gas flows in through the through-going hole and directly flows to the sampling module, thereby shortening the flow path of the gas flow, and facilitating the sampling module to rapidly and accurately obtain the environment information inside the shell. By providing a plurality of through-going holes, the synchronization between the states of the environment inside the shell and the environment around the sampling module can be improved, facilitating the sampling module to rapidly and accurately obtain the environment information inside the shell.

In some embodiments, the battery cell further includes a circuit board, the circuit board being provided on a side of the wall portion facing away from the inside of the shell. The detection sensor includes a pin, the pin being provided on a side of the encapsulation housing facing away from the inside of the shell, and the sampling module being connected to the circuit board through the pin.

The above configuration facilitates the installation and removal of the circuit board, reducing the risk of a short circuit caused by contact between the circuit board and the electrode assembly, and also reducing the corrosion of the circuit board caused by the electrode assembly and the electrolyte.

In some embodiments, the battery cell further includes a processor, the processor being provided on the circuit board and connected to the sampling module through the pin.

In the above manner, the processor can process the environment information sampled by the detection sensor, enabling the intelligent battery cells. In addition, providing the processor on the circuit board can improve the stability of the connection between the processor and the circuit board, thereby improving the stability of the connection between the processor and the detection sensor.

In some embodiments, the processor is provided on a side of the circuit board facing away from the inside of the shell.

The above configuration facilitates the processor heat dissipation.

In some embodiments, the detection sensor includes a conditioning module, the conditioning module and the sampling module being provided on the same side of the circuit board, or on opposite sides of the circuit board.

In the above manner, the conditioning module and the sampling module are separately provided on the circuit board, such that the degree of freedom of installation of the two can be improved, and the overall space occupation of the detection sensor can be optimized, and in addition, facilitating the improvement of the volumetric energy density compared with the space interference to a shell, an electrode assembly, and the like from the integration of the conditioning module and the sampling module. In addition, by providing the conditioning module on the circuit board, the stability of the connection between the conditioning module and the circuit board can be improved, thereby improving the stability of the connection between the conditioning module and the sampling module.

In some embodiments, the shell includes a case and an end cover, the case being provided with an open end, the end cover covering the open end, and the electrode assembly being accommodated inside the case. The end cover forms the wall portion. The mounting hole is provided in the end cover.

In the above manner, the mounting hole is provided in the end cover, facilitating blocking of mounting hole. The detection sensor is provided in the end cover, thereby facilitating installation of the detection sensor.

In some embodiments, the battery cell includes two electrode terminal posts, the two electrode terminal posts being arranged at an interval, and penetrating the end cover. The circuit board is electrically connected to the two electrode terminal posts, so that the electrode assembly supplies power to the circuit board through the two electrode terminal posts.

In the above manner, the end cover may have the function of positioning the two electrode terminal posts. The two electrode terminal posts can be fixed with respect to the end cover. The circuit board is provided on the wall portion, such that the space utilization of the wall portion can be improved, and the structural compactness of the battery cell can be improved.

In some embodiments, the detection sensor is a gas pressure sensor, a gas sensor, or a temperature sensor.

In the above manner, the detection sensor is provided as a gas pressure sensor, which can detect a gas pressure inside the shell; the detection sensor is provided as a gas sensor, which can detect the type and/concentration of one or more gases inside the shell; and the detection sensor is provided as a temperature sensor, which can detect the temperature inside the shell, facilitating management of the operating state of the battery cell.

In a second aspect, the present application provides a battery including the battery cell described above.

In a third aspect, the present application provides an electrical device including the battery described above.

The above description only refers to an overview of the technical solution of the present application. In order to understand the technical means of the present application more clearly, it can be implemented according to the content of the description. In order to make the above-mentioned and other purposes, features and advantages of the present application more apparent, the specific implementations of the present application are listed below.

### BRIEF DESCRIPTION OF THE DRAWINGS

Various other advantages and benefits will become apparent to those of ordinary skill in the art upon reading the following detailed description of the preferred implementations. The accompanying drawings are merely used for illustrating the preferred implementations and are not intended to constitute a limitation on the present application. In addition, throughout the accompanying drawings, same parts are indicated by the same reference numerals. In the accompanying drawings:
FIG. 1 is a schematic structural diagram of a vehicle according to one or more embodiments;
FIG. 2 is a schematic exploded structural diagram of a battery according to one or more embodiments;
FIG. 3 is a schematic exploded structural diagram of a battery cell according to one or more embodiments;
FIG. 4 is a schematic structural top diagram of the battery cell shown in FIG. 3;
FIG. 5 is a schematic block diagram of a circuit structure of a battery cell according to one or more embodiments;
FIG. 6 is a schematic structural diagram of the circuit board, detection sensor, and processor shown in FIG. 5;
FIG. 7 is a partial schematic structural diagram of a cross section of a battery cell along a B-B line shown in FIG. 4;
FIG. 8 is a further schematic structural diagram of the circuit board, detection sensor, and processor shown in FIG. 5;
FIG. 9 is a partial schematic structural diagram of the battery cell shown in FIG. 3;
FIG. 10 is a schematic diagram of an installation process of the detection sensor shown in FIG. 9;
FIG. 11 is a further partial schematic structural diagram of a battery cell according to one or more embodiments;
FIG. 12 is a schematic structural bottom diagram of a partial structure of a battery cell shown in FIG. 11;
FIG. 13 is a schematic structural top diagram of a partial structure of a battery cell shown in FIG. 11; and
FIG. 14 is a schematic cross sectional structural diagram of a partial structure of the battery cell shown in FIG. 13 along a line A-A.

Reference numerals in the specific implementations are as follows:
1000a-vehicle;
100a-battery; 200a-controller; 300a-motor;
10a-box; 11a-first portion; 12a-second portion;
1-battery cell; 100-shell; 101-wall portion; 102-mounting hole; 103-first hole section; 104-second hole section; 105-support table surface; 110-case; 111-open end; 112-opening; 120-end cover; 200-electrode assembly; 201-tab; 300-circuit board; 400-detection sensor; 401-pin; 410-sampling module; 420-conditioning module; 430-encapsulation housing; 431-through-hole; 432-insertion portion; 433-flange portion; 500-isolating cover; 510-isolating space; 520-through-going hole; 600-plastic part; 800-processor; and 900-electrode terminal post.

### DETAILED DESCRIPTION

The embodiments of the technical solutions of the present application will be described in detail below with reference to the accompanying drawings. The following embodiments are only used to illustrate the technical solutions of the present application more explicitly, and are thus only interpreted as examples, rather than used to limit the protection scope of the present application.

Unless otherwise defined, meanings of all technical and scientific terms used in this specification are the same as those usually understood by a person skilled in the art to which the present application belongs. The terms used herein are merely for the purpose of describing specific embodiments, but are not intended to limit the present application. The terms "include/comprise" and "has/have" and any variations thereof in the specification and the claims of the present application as well as the above Description of Drawings are intended to cover non-exclusive inclusion.

In the description according to the embodiments of the present application, the technical terms "first", "second", and the like are only used to distinguish different objects, and should not be understood as indicating or implying relative importance or implying the number, specific order or primary and secondary relationship of indicated technical features. In the description according to the embodiments of the present application, "a plurality of" means two or more, unless otherwise expressly and specifically defined.

Embodiment mentioned in the specification means that particular features, structures, or characteristics described with reference to the embodiment may be included in at least one embodiment of the present application. The appearance of this phrase in various places in the specification does not necessarily refer to the same embodiment, nor is it a separate or alternative embodiment that is mutually exclusive with other embodiments. A person skilled in the art explicitly or implicitly understands that the embodiments described in the specification may be combined with other embodiments.

In the description of the embodiments of the present application, the term "and/or" is simply a description of an association of associated objects, which indicates that there may exist three relationships, for example, A and/or B may represent three situations: A exists alone, both A and B exist, and B exists alone. In addition, the character "/" in this specification generally indicates an "or" relationship between the associated objects.

In the description of the embodiments of the present application, the term "a plurality of" means two or more (including two). Similarly, "a plurality of groups" means two or more groups (including two groups), and "a plurality of pieces" means two or more pieces (including two pieces).

In the description according to the embodiments of the present application, the directions or positional relationships indicated by the technical terms such as "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", and "circumferential", are only for the convenience of describing the present application and simplifying the description, rather than indicating or implying that the involved device or element should have a specific orientation or should be configured or operated in the specific orientation, therefore, they cannot be understood as limiting the present application.

In the description of the embodiments of the present application, unless otherwise explicitly specified and defined, the terms such as "install", "connect", "connection", and "fix" should be understood in a broad sense. For example, the connection may be a fixed connection, a detachable connection, or an integral connection; or the connection may be a mechanical connection or an electrical connection; or the connection may be a direct connection, an indirect connection through an intermediate medium, internal communication between two components, or an interaction relationship between two components. For those of ordinary skill in the art, the specific meanings of the above terms in the embodiments of the present application may be interpreted according to specific situations.

With the development of battery technologies, battery cells are being used in more and more fields, and are gradually replacing conventional fossil energy sources in the field of vehicle power. The battery cell can store chemical energy and convert the chemical energy into electrical energy in a controlled manner. In rechargeable battery cells, an active material can be activated by charging for continued use after the battery cells have been discharged.

The battery cell may often include an electrode assembly, an electrode terminal post, and a shell. The shell can accommodate the electrode assembly. The electrode assembly is electrically connected to an external device via the electrode terminal posts. In the structure of an existing battery cell, the space inside the shell is limited and compact. To ensure a relatively high volumetric energy density, larger or more electrode assemblies need to be placed in the limited space inside the shell, making it difficult to place other components and therefore difficult to obtain environment information inside the shell, hindering the effective management of the operating state of the battery cell. In the related art, to detect the environment inside the shell, a detection sensor is provided inside the shell. The detection sensor inevitably occupies the space inside the shell and therefore the space of an electrode assembly, which is not conducive to the improvement of the volumetric energy density of a battery cell.

To reduce the space occupied by the detection sensor to improve the volumetric energy density of the battery cell, at least a part of the encapsulation housing is inserted into the mounting hole, and the at least a part of the encapsulation housing occupies space of the wall portion, thereby reducing the space occupation inside the shell or outside the shell, facilitating the reduction of the overall volume and space occupation of the battery cell. In addition, since the space occupied by the detection sensor in the inside of the shell can be reduced, more space can be provided for accommodating the electrode assembly inside the shell, thereby improving the space utilization of the inside of the shell. Therefore, the volumetric energy density of the battery cell is increased, and the structure of the battery cell is more compact. To protect the sampling module, an encapsulation housing may be further provided. On one hand, the encapsulation housing can reduce the damage to the sampling module caused by factors outside the shell, and on the other hand, the encapsulation housing can be blocked between the sampling module, the electrode assembly, and the electrolyte, thereby reducing the corrosion to the sampling module caused by the electrolyte inside the shell and the electrode assembly, and reducing the risk of a short circuit occurring due to the direct contact of the sampling module with the electrode assembly.

In view of the above consideration, the present application provides a battery cell, a battery and an electrical device. Herein, the battery cell includes a shell, an electrode assembly, and a detection sensor. The shell includes a wall portion, the wall portion being provided with a mounting hole in communication with inside and outside of the shell. The electrode assembly is accommodated inside the shell. The detection sensor includes a sampling module and an encapsulation housing configured to encapsulate the sampling module. At least part of the encapsulation housing is inserted into the mounting hole and blocks the mounting hole. The sampling module is configured to sample an environment inside the shell. In this way, the space occupied by the detection sensor inside the shell can be reduced, thus facilitating improvement of the volumetric energy density of the battery cell. On the other hand, by providing the detection sensor at least partially outside the shell or in the mounting hole, a spacing distance between the sampling module and the electrode assembly can be increased, such that the probability of corrosion of the sampling module by the electrode assembly is reduced, and the risk of a short circuit caused by contact between the sampling module and the electrode assembly is reduced.

The battery cell, the battery, and the electrical device disclosed in the embodiments of the present application can be used in an electrical device using a battery as a power supply or various energy storage systems using a battery as an energy storage element. The electrical device may be, but is not limited to, a mobile phone, a tablet computer, a laptop, an electric toy, an electric tool, a battery cart, an electric vehicle, a ship, a spacecraft, etc. Herein, the electric toy may include a stationary or mobile electric toy, such as a game console, an electric vehicle toy, an electric ship toy and an electric airplane toy. The spacecraft may include an airplane, a rocket, a space shuttle, a spaceship, etc.

For convenience of description, the following embodiments are illustrated by taking an example in which the electrical device according to an embodiment of the present application is a vehicle 1000a.

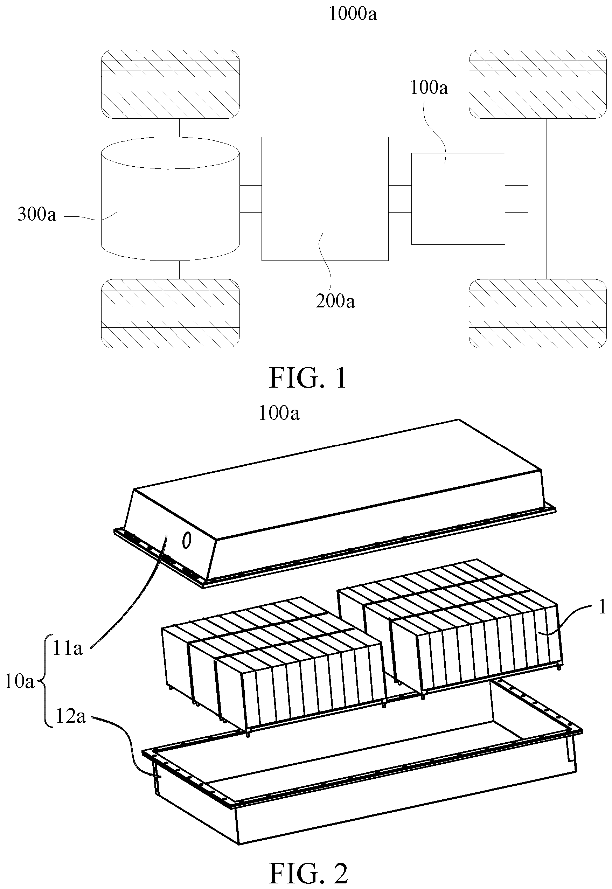

Referring to FIG. 1, the vehicle 1000a may be a fuel powered vehicle, a gas powered vehicle, or a new energy vehicle. The new energy vehicle may be a pure electric vehicle, a hybrid electric vehicle, or an extended range vehicle, etc. The inner part of the vehicle 1000a is provided with a battery 100a. The battery 100a may be arranged at the bottom, head, or tail of the vehicle 1000a. The battery 100a may be configured to supply power to the vehicle 1000a. For example, the battery 100a may be used as a power supply for operating the vehicle 1000a. The vehicle 1000a may further include a controller 200a and a motor 300a. The controller 200a is configured to control the battery 100a to supply power to the motor 300a, for example, to meet working power requirements during starting, navigation, and traveling of the vehicle 1000a.

In some embodiments of the present application, the battery 100a can not only serve as a power supply for operating the vehicle 1000a, but can also serve as a power supply for driving the vehicle 1000a, in place of or partially in place of fuel or natural gas, to provide driving power for the vehicle 1000a.

In some embodiments, the battery 100a can be an energy storage device. The energy storage device includes an energy storage container, an energy storage electric cabinet, and the like.

The battery 100a mentioned in embodiments of the present application is a single physical module including one or more battery cells 1 to provide a higher voltage and a higher capacity.

In the embodiments of the present application, the battery cell 1 may be a secondary battery, which is a battery cell 1 of which active materials can be activated by means of charging for reuse after the battery cell 1 is discharged. Each battery cell 1 may be a primary battery.

The battery cell 1 includes but is not limited to a lithium-ion battery, a sodium-ion battery, a sodium/lithium-ion battery, a lithium metal battery, a sodium metal battery, a lithium-sulfur battery, a magnesium-ion battery, a nickel-hydrogen battery, a nickel-cadmium battery, a lead storage battery, etc. The battery cell 1 may be cylindrical, flat, cuboid, or in other shapes.

In some embodiments, the battery 100a may be a battery module. When there are a plurality of battery cells 1, the plurality of battery cells 1 are arranged and fixedly formed into a battery module.

In some embodiments, referring to FIG. 2, the battery 100a may be a battery pack. The battery pack includes a box 10a and a battery cell 1, and the battery cell 1 or battery module is accommodated in the box 10a.

In some embodiments, the box 10a may be used as a part of a chassis structure of the vehicle 1000a. For example, a part of the box 10a may become at least a part of a floor of the vehicle 1000a, or a part of the box 10a may become at least a part of a cross beam and a longitudinal beam of the vehicle 1000a.

Referring to FIG. 2, the battery 100a includes a box 10a and battery cells 1, where the battery cells 1 are accommodated in the box 10a. Herein, the box 10a is configured to provide an accommodating space for the battery cells 1. The box 10a may be of a variety of structures. In some embodiments, the box 10a may include a first portion 11a and a second portion 12a, the first portion 11a and the second portion 12a cover each other, and the first portion 11a and the second portion 12a jointly define the accommodating space for accommodating the battery cells 1. The second portion 12a may be of a hollow structure with one end open, the first portion 11a may be of a plate-like structure, and the first portion 11a covers an open side of the second portion 12a such that the first portion 11a and the second portion 12a jointly define the accommodating space. Alternatively, both of the first portion 11a and the second portion 12a may be of a hollow structure with one side open, and an open side of the first portion 11a covers the open side of the second portion 12a. Of course, the box 11a formed by the first portion 12a and the second portion 10a may be in various forms, such as a cylinder and a cuboid.

In the battery 100a, there may be a plurality of battery cells 1, and the plurality of battery cells 1 can be connected in series, parallel, or series-parallel. The series-parallel connection means that both series connection and parallel connection exist among the plurality of battery cells 1. The plurality of battery cells 1 may be directly combined together in series connection, in parallel connection or in series-parallel connection, and then a unit consisting of the plurality of battery cells 1 is accommodated in the box 10a. Of course, the battery 100a may also be formed in such a way that a plurality of battery cells 1 are firstly connected in series, in parallel or in series-parallel to form a battery module, and then a plurality of battery modules are connected in series, in parallel or in series-parallel to form a unit and are received in the box 10a. The battery 100a may further include other structures. For example, the battery 100a may further include a busbar component configured to achieve electrical connection between the plurality of battery cells 1.

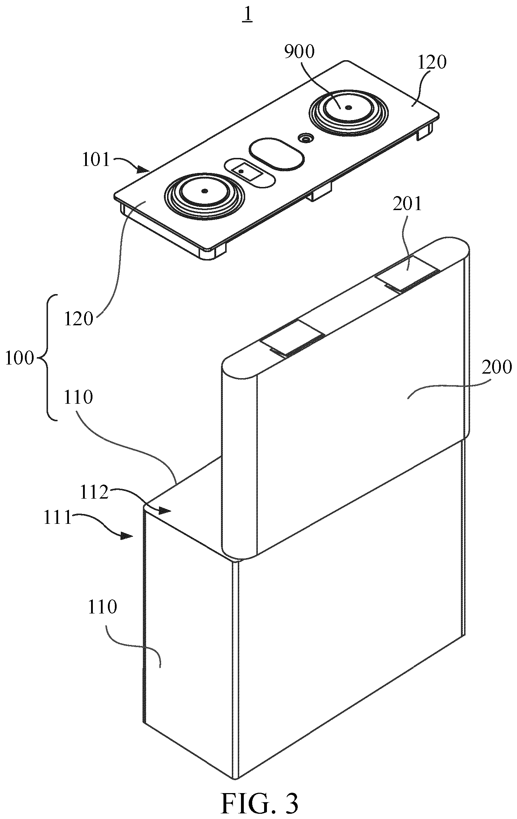

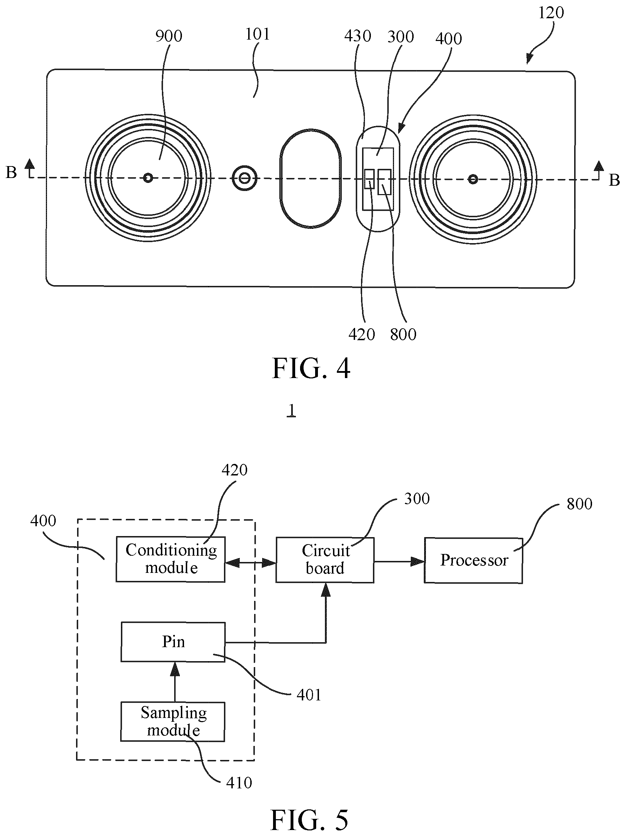

Referring to FIG. 3 and FIG. 4, the battery cell 1 refers to a minimum unit that constitutes a battery. In this embodiment, the cylindrical battery cell 1 is used as an example for description. As shown in FIG. 3 and FIG. 4, the battery cell 1 includes a shell 100, and an electrode assembly 200, and other functional components.

In some embodiments, the shell 100 is configured to encapsulate components such as the electrode assembly 200 and an electrolyte. The shell 100 may be a steel shell, an aluminum shell, a plastic shell (such as a polypropylene shell), a composite metal shell (such as a copper-aluminum composite shell), an aluminum-plastic film, etc.

The shell 100 may include an end cover 120 and a case 110. The end cover 120 refers to a component that covers an opening of the case 110 to isolate an internal environment of the battery cell 1 from an external environment. A shape of the end cover 120 is not limited and may be adapted to a shape of the case 110 to fit the case 110. Optionally, the end cover 120 may be made of a material (for example, an aluminum alloy) with a certain hardness and strength. In this way, the end cover 120 is less prone to deformation when subjected to compression and collision, so that the battery cell 1 may have a higher structural strength and the safety performance can also be improved. Functional components such as electrode terminal posts 900 may be arranged on the end cover 120. The electrode terminal posts 900 may be used for electrical connection with the electrode assembly 200 for outputting or inputting the electric energy of the battery cell 1. In some embodiments, the end cover 120 may also be provided with a pressure relief mechanism configured to relieve internal pressure when the internal pressure or temperature in the battery cell 1 reaches a threshold. The end cover 120 may also be made of various materials, such as copper, iron, aluminum, stainless steel, aluminum alloy, and plastic. In some embodiments, an insulation component may also be arranged on an inner side of the end cover 120. The insulation component can be configured to isolate electrical connection parts in the case 110 from the end cover 120, reducing a risk of short circuit. For example, the insulation component may be made of plastic or rubber.

The case 110 is an assembly configured to form an internal environment of the battery cells 1 together with the end cover 120, where the formed internal environment may be configured to accommodate the electrode assembly 200, an electrolyte, and other components. The case 110 and the end cover 120 may be separate components, an opening 112 may be provided in the case 110, and the end cover 120 covers the opening 112 at the open end 112 to form the internal environment of the battery cell 1. Without limitation, the end cover 120 and the case 110 may also be integrated. Specifically, the end cover 120 and the case 110 may form a shared connection surface before other components are arranged inside the case, and then the end cover 120 covers the case 110 when the inside of the case 110 needs to be enclosed. The case 110 may be of various shapes and sizes, such as a rectangular shape, a cylindrical shape, and a hexagonal prism shape. Specifically, the shape of the case 110 may be determined based on a specific shape and size of an electrode assembly 200. The case 110 may be made of various materials, such as including but not limited to copper, iron, aluminum, stainless steel, aluminum alloy, and plastic.

The electrode assembly 200 is a component in the battery cell 1 that undergoes electrochemical reactions. The case 110 may include one or more electrode assemblies 200.

In some embodiments, the electrode assembly 200 includes a positive electrode, a negative electrode, and a separator. During charging and discharging of the battery cell 1, active ions (e.g., lithium ions) are intercalated and deintercalated between the positive electrode and the negative electrode. The separator is arranged between the positive electrode and the negative electrode, and mainly functions to prevent a short circuit between the positive electrode and the negative electrode while enabling the active ions to pass through.

In some embodiments, the positive electrode is a positive electrode plate. The positive electrode plate includes a positive electrode current collector and a positive electrode active material provided on at least one surface of the positive electrode current collector.

As an example, the positive electrode current collector has two surfaces opposite to each other in a thickness direction of the positive electrode current collector, and the positive electrode active material layer is provided on either or both of the two opposite surfaces of the positive electrode current collector.

As an example, the positive electrode current collector may be a metal foil or a composite current collector. For example, as the metal foil, a silver-surface-processed aluminum or stainless steel, copper, aluminum, nickel, a carbon electrode, carbon, nickel, or titanium may be used. The composite current collector can include a polymer material substrate layer and a metal layer. The composite current collector can be formed by forming a metal material (aluminum, aluminum alloys, nickel, nickel alloys, titanium, titanium alloys, silver and silver alloys, etc.) on a polymer material substrate (such as polypropylene, polyethylene terephthalate, polybutylene terephthalate, polystyrene, polyethylene, etc.).

As an example, the positive electrode active material may include at least one of the following materials: a lithium-containing phosphate, a lithium transition metal oxide, and their respective modified compounds. However, the present application is not limited to these materials, and other conventional materials that can be used as positive electrode active materials for batteries may also be used. These positive electrode active materials may be used alone or as a combination of two or more. Herein, examples of the lithium-containing phosphate include, but are not limited to, at least one of lithium iron phosphate (e.g., LiFePO₄ (also referred to as LFP)), lithium iron phosphate and carbon composites, lithium manganese phosphate (e.g., LiMnPO₄), lithium manganese phosphate and carbon composites, lithium iron manganese phosphate, and lithium iron manganese phosphate and carbon composites. Examples of lithium transition metal oxides may include, but are not limited to, at least one of lithium cobalt oxide (e.g., LiCoO₂), lithium nickel oxide (e.g., LiNiO₂), lithium manganese oxide (e.g., LiMnO₂, and LiMn2O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), and LiNi_{0.8}Co_{0.1}Mn_{0.1}O₂ (also referred to as NCM₈₁₁)), lithium nickel cobalt aluminum oxide (e.g., LiNi_{0.85}Co_{0.15}Al_{0.05}O₂), and modified compounds thereof, etc.

In some embodiments, the negative electrode may be a negative electrode plate. The negative electrode plate may include a negative electrode current collector.

As an example, the negative electrode current collector may be a metal foil, a foam metal, or a composite current collector. For example, as the metal foil, a silver-surface-processed aluminum or stainless steel, copper, aluminum, nickel, a carbon electrode, carbon, nickel, or titanium may be used. The foam metal may be foam nickel, foam copper, foam aluminum, foam alloy, foam carbon, etc. The composite current collector can include a polymer material substrate layer and a metal layer. The composite current collector can be formed by forming a metal material (copper, copper alloys, nickel, nickel alloys, titanium, titanium alloys, silver and silver alloys, etc.) on a polymer material substrate (such as substrate of polypropylene, polyethylene terephthalate, polybutylene terephthalate, polystyrene, polyethylene, etc.).

As an example, the negative electrode plate includes a negative electrode current collector and a negative electrode active material provided on at least one surface of the negative electrode current collector.

As an example, the negative electrode current collector has two opposite surfaces in its own thickness direction, and the negative electrode active material is provided on either or both of the two opposite surfaces of the negative electrode current collector.

As an example, the negative electrode active material may be a negative electrode active material used for a battery cell 1 well known in the art. As an example, the negative electrode active material may include at least one of the following materials: artificial graphite, natural graphite, soft carbon, hard carbon, a silicon-based material, a tin-based material, lithium titanate, or the like. The silicon-based material may be selected from at least one of elemental silicon, silicon-oxygen compound, silicon-carbon composite, silicon-nitrogen composite, or silicon alloy. The tin-based material may be selected from at least one of elemental tin, tin-oxygen compound, or tin alloy. However, the present application is not limited to these materials, and other conventional materials that can be used as negative electrode active materials for batteries can also be used. These negative electrode active materials may be used alone or as a combination of two or more.

In some embodiments, a material of the positive electrode current collector may be aluminum, and a material of the negative electrode current collector may be copper.

In some embodiments, the electrode assembly 200 further includes a separator, provided between the positive electrode and the negative electrode.

In some embodiments, the separator is a separator film. The type of the separator film is not particularly limited in the present application, and any well-known separator film with a porous structure having good chemical stability and mechanical stability may be selected.

As an example, the main material of the separator film may be selected from at least one of glass fibers, non-woven fabric, polyethylene, polypropylene, polyvinylidene fluoride, and ceramic. The separator film can be a single-layer film or a multilayer composite film and is not limited particularly. When the separator film is a multilayer composite film, the materials of layers may be the same or different, which is not limited particularly. The separator may be a separator component located between the positive and negative electrodes, or may be attached to the surfaces of the positive and negative electrodes.

In some embodiments, the separator is a solid electrolyte. The solid-state electrolyte is provided between the positive electrode and the negative electrode, and also functions to transmit ions and isolate the positive electrode and the negative electrode.

In some embodiments, the battery cell 1 further includes an electrolyte, which functions to conduct ions between the positive and negative electrodes. The type of the electrolyte is not specifically limited in the present application, and may be selected according to requirements. For example, the electrolyte may be in a liquid, gel, or solid state.

Herein, the liquid electrolyte includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis-trifluoromethanesulfonimide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. The solution may be an ether solvent. The ether solvent may include one or more of ethylene glycol dimethyl ether, ethylene glycol diethyl ether, diethylene glycol dimethyl ether, triethylene glycol dimethyl ether, 1,3-dioxolane, tetrahydrofuran, methyltetrahydrofuran, diphenylether, or a crowned ether.

Herein, the gel state electrolyte includes a framework network with a polymer as an electrolyte, in combination with an ion liquid-a lithium salt.

Herein, the solid-state electrolyte includes a polymer solid-state electrolyte, an organic solid-state electrolyte, or a composite solid-state electrolyte.

As an example, the polymer solid-state electrolyte may be polyether (polyoxyethylene), polysiloxane, polyearbonate, polyacrylonitrile, polyvinylidene fluoride, polymethyl methacrylate, a monoionic polymer, a polyionic liquid-lithium salt, or a combination thereof.

As an example, the organic solid-state electrolyte may be one or more of an oxide solid electrolyte (crystalline perovskite, a sodium superconducting ion conductor, garnet, or an amorphous LiPON thin film), a sulfide solid electrolyte (crystalline lithium superconducting ion conductor (lithium germanium phosphorus sulfide, and argyrodite) an amorphous sulfide), a halide solid electrolyte, a nitride solid electrolyte, and a hydride solid electrolyte.

As an example, the composite solid-state battery is formed by adding an organic solid-state electrolyte filler to a polymer solid electrolyte.

In some embodiments, the electrode assembly 200 is of a winding structure. The positive electrode plate and the negative electrode plate are wound into a wound structure.

In some embodiments, the electrode assembly 200 is provided with tabs 201, and the tab may derive the current from the electrode assembly 200. The tabs include a positive electrode tab and a negative electrode tab. The positive electrode tab and the negative electrode tab may be located at one end of the body portion together or at two ends of the body portion separately. During charging and discharging of the battery 100a, a positive electrode active substance and a negative electrode active substance react with the electrolyte, and the tabs 201 are connected to the electrode terminal posts 900 to form a current loop.

According to some embodiments of the present application, as shown in FIG. 3 to FIG. 5, the battery cell 1 described in an embodiment of a battery cell 1 in the present application includes a shell 100, an electrode assembly 200, and a detection sensor 400. The shell 100 includes a wall portion 101, the wall portion 101 being provided with a mounting hole 102 in communication with inside and outside the shell 100. The electrode assembly 200 is accommodated inside the shell 100. The detection sensor 400 includes a sampling module 410 and an encapsulation housing 430 configured to encapsulate the sampling module 410. At least a part of the encapsulation housing 430 is inserted into the mounting hole 102 and blocks the mounting hole 102. The sampling module 410 is configured to sample an environment inside the shell 100.

In the use process of the battery cell 1, the inside of the shell 100 is usually dynamically changed. For example, the volume of the electrode assembly 200 may be expanded. For another example, the temperature and pressure inside the shell 100 may be changed, or a gas is generated inside the shell 100. The environment information inside the shell 100 may be obtained by the detection sensor 400, for example, the gas, temperature, or gas pressure inside the shell 100 is sampled, to improve the effective management of the operating state of the battery cell 1, thereby improving the working stability of the battery cell 1.

The change of the environment inside the shell 100 may cause a corresponding change in the mounting hole 102, such that the sampling module 410 can quickly and accurately obtain the environment information inside the shell 100 through the mounting hole 102. For example, when the temperature inside the shell 100 increases, heat may be transferred to the mounting hole 102. For another example, when the gas pressure inside the shell 100 increases, the gas pressure inside the mounting hole 102 also increases correspondingly, or when the gas concentration inside the shell 100 changes, the gas concentration inside the mounting hole 102 also changes correspondingly.

At least a part of the encapsulation housing 430 is inserted into the mounting hole 102, and the at least a part of the encapsulation housing 430 occupies the space of the wall portion 101, thereby reducing the space occupation inside the shell 100 or outside the shell 100, which facilitating the reduction of the overall volume and space occupied by the battery cell 1.

In some embodiments, the sampling module 410 is provided in the mounting hole 102. The mounting hole 102 is provided in the wall portion 101, such that the environment information inside the shell 100 that is obtained by the sampling module 410 can be transmitted to a component outside the shell 100, such that the outside manages the environment inside the shell 100. In some other embodiments, the sampling module 410 is provided outside the shell 100, and the sampling module 410 may obtain environment information inside the shell 100 through the mounting hole 102.

Compared with that the detection sensor 400 is provided completely inside the shell 100, by providing the detection sensor 400 at least partially outside the shell 100 or in the mounting hole 102, the space occupied by the detection sensor 400 inside the shell 100 can be reduced, to provide more space for the shell 100 to accommodate the electrode assembly 200, thereby improving the space utilization inside the shell 100, thereby improving the volumetric energy density of the battery cell 1, and enabling the structure of the battery cell 1 to be more compact. On the other hand, by providing the detection sensor 400 at least partially outside the shell 100 or in the mounting hole 102, a spacing distance between the sampling module 410 and the electrode assembly 200 can be increased, such that the probability of corrosion of the sampling module 410 by the electrode assembly 200 is reduced, and the risk of a short circuit caused by contact between the sampling module 410 and the electrode assembly 200 is reduced.

The encapsulation housing 430 may protect the sampling module 410. On one hand, the encapsulation housing 430 can reduce the damage caused by factors outside the shell 100 to the sampling module 410, and on the other hand, the encapsulation housing 430 can be blocked between the sampling module 410, the electrode assembly 200, and the electrolyte, thereby reducing the corrosion to the sampling module 410 caused by the electrolyte inside the shell 100 and the electrode assembly 200, and reducing the risk of a short circuit occurring due to the direct contact of the sampling module 410 with the electrode assembly 200.

The wall portion 101 may be configured to mount the encapsulation housing 430. The encapsulation housing 430 may be configured to mount the sampling module 410 to the wall portion 101. The encapsulation housing 430 is provided to facilitate installation of the sampling module 410. During the design process of the battery cell 1, the size and shape of the encapsulation housing 430 may be adjusted according to the size and extent of the mounting hole 102, thereby facilitating the reduction of the overall size of the detection sensor 400, and improving the space utilization of the battery cell 1.

At least a part of the encapsulation housing 430 is inserted into the mounting hole 102, such that the mounting hole 102 can restrict the motion range of the encapsulation housing 430 along a radial direction of the mounting hole 102, thereby facilitating mounting of the encapsulation housing 430. The mounting hole 102 is blocked by providing the encapsulation housing 430, to restrict the leakage of the electrolyte inside the battery cell 1 through the mounting hole 102. Further, the size and shape of the encapsulation housing 430 may be provided to match the mounting hole 102, thereby facilitating blocking the mounting hole 102 by the encapsulation housing 430, and improving the blocking effect of the shell 100.

Further, in the radial direction of the mounting hole 102, the part of the encapsulation housing 430 located inside the mounting hole 102 may fill the mounting hole 102, to block the mounting hole 102.

According to some embodiments of the present application, optionally, as shown in FIG. 4, the encapsulation housing 430 is secured to the wall portion 101 by welding.

Such providing, on one hand, is beneficial to a stable connection between the encapsulation housing 430 and the wall portion 101, and on the other hand, the mounting hole 102 may be sealed in a manner of connecting the encapsulation housing 430 to the wall portion 101 by means of welding. Further, the encapsulation housing 430 is of a metal material.

Optionally, the welding operation may be performed from a side of the wall portion 101 facing away from the inside of the shell 100. A fusion body may be formed in the welding process, and after the fusion body is solidified, the encapsulation housing 430 and the wall portion 101 may be connected.

According to some embodiments of the present application, optionally, as shown in FIG. 3, FIG. 4, and FIG. 6, the encapsulation housing 430 is provided with a through-hole 431 on a side facing the inside of the shell 100, and at least a part of the sampling module 410 is exposed through the through-hole 431, to sample the environment inside the shell 100.

A through-hole 431 is provided in a side of the encapsulation housing 430 facing the inside of the shell 100, facilitating the sampling module 410 quickly and accurately obtaining the environment information inside the shell 100. The change of the environment inside the shell 100 may cause a corresponding change in the through-hole 431, such that the sampling module 410 can quickly and accurately obtain the environment information inside the shell 100 through the through-hole 431.

The sampling module 410 is provided to be exposed through the through-hole 431, such that the sampling module 410 can face the inside of the shell 100, facilitating the sampling module 410 to quickly and accurately obtain the environment information inside the shell 100, and thus facilitating the management of operating state of the battery cell 1 by the external system, and improving the operating stability of the battery cell 1. On the other hand, the size of the through-hole 431 is relatively small, and providing the through-hole 431 can reduce the exposed area of the sampling module 410, such that the encapsulation housing 430 effectively protects the sampling module 410, and reduces the probability that the sampling module 410 is damaged or corroded.

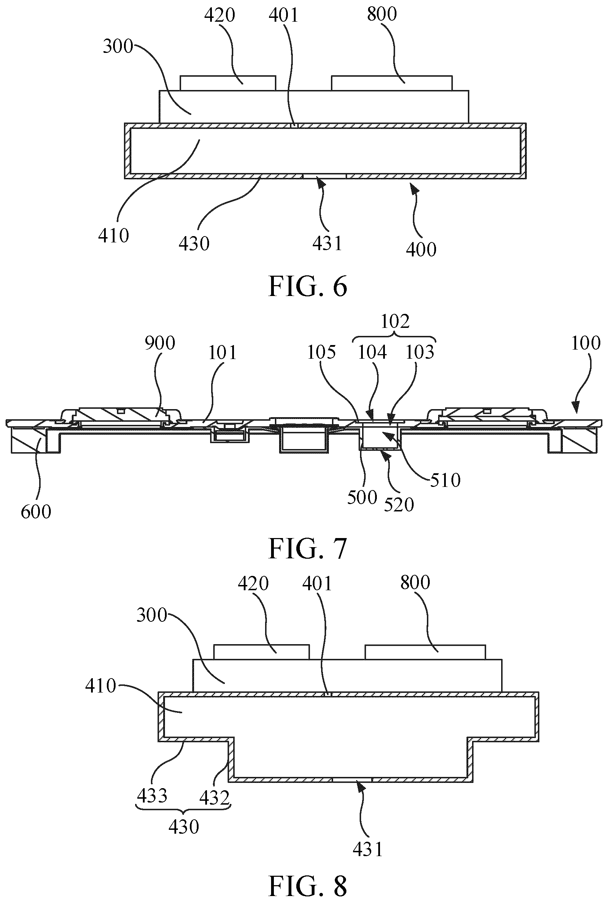

According to some embodiments of the present application, optionally, as shown in FIG. 6 and FIG. 7, the mounting hole 102 includes a first hole section 103 and a second hole section 104 in communication with each other, the first hole section 103 is closer to the inside of the shell 100 than the second hole section 104, and a support table surface 105 facing the second hole section 104 is formed at the connection between the first hole section 103 and the second hole section 104. At least a part of the encapsulation housing 430 is provided at the second hole section 104 and supported by the support table surface 105.

The axial direction of the mounting hole 102 refers to an interval direction between one end of the mounting hole 102 facing towards the inside of the shell 100 and one end facing away from the inside of the shell 100, and the radial direction of the mounting hole 102 is perpendicular to the axial direction of the mounting hole 102.

The second hole section 104 may be configured to mount the encapsulation housing 430. The support table surface 105 may restrict the encapsulation housing 430 from moving toward the inside of the shell 100, and the second hole section 104 may restrict the moving range of the encapsulation housing 430 along the radial direction of the mounting hole 102, facilitating mounting of the encapsulation housing 430, and also facilitating maintaining a stable structure of the encapsulation housing 430 after the encapsulation housing 430 is mounted.

Optionally, the encapsulation housing 430 is partially located in the first hole section 103, and partially located in the second hole section 104.

According to some embodiments of the present application, optionally, as shown in FIG. 7 and FIG. 8, the encapsulation housing 430 includes an insertion portion 432 and a flange portion 433 protruding from an outer periphery of the insertion portion 432, the flange portion 433 is supported by the support table surface 105, and at least a part of the insertion portion 432 is inserted into the first hole section 103.

The support table surface 105 can restrict the movement of the flange portion 433 toward the inside of the shell 100, the second hole section 104 can restrict the movement range of the flange portion 433 along a radial direction of the mounting hole 102, and the first hole section 103 can restrict the movement range of the insertion portion 432 along a radial direction of the mounting hole 102, thereby facilitating mounting of the encapsulation housing 430.

Optionally, the flange portion 433 may be connected to the wall portion 101 by welding. A fusion body may be formed in the welding process, and after the fusion body is solidified, the flange portion 433 and the wall portion 101 may be connected. The welding operation may be performed from a side of the flange portion 433 facing away from the inside of the shell 100. Further, during the welding process, a generated fusion body may extend from the flange portion 433 into the side wall of the second hole section 104, to connect the flange portion 433 and the wall portion 101. Alternatively, during the welding process, a generated fusion body may penetrate the flange portion 433 from a side of the flange portion 433 facing away from the inside of the shell 100, and extend through the support table surface 105 and into the wall portion 101, to connect the flange portion 433 to the wall portion 101.

Optionally, in the radial direction of the first hole section 103, the part of the encapsulation housing 430 located inside the first hole section 103 may fill the first hole section 103, to block the first hole section 103.

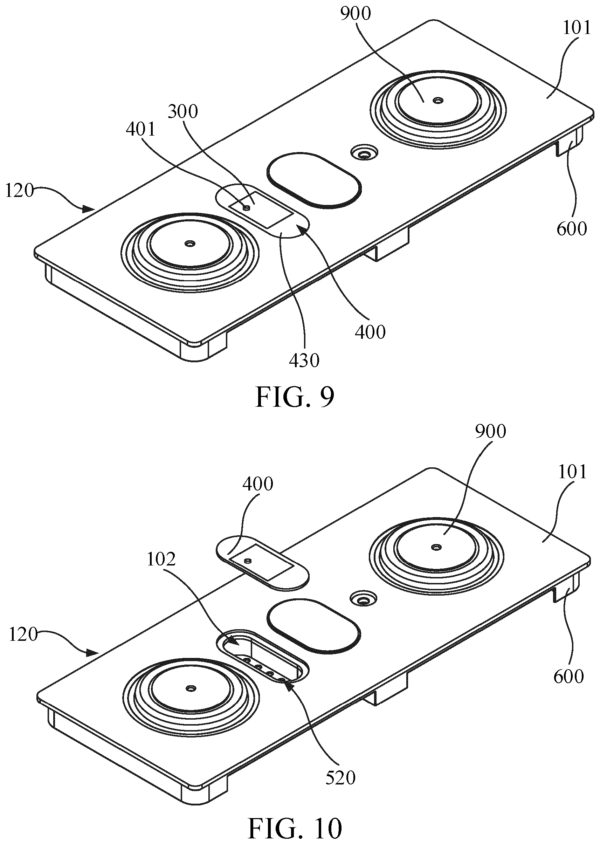

According to some embodiments of the present application, optionally, as shown in FIG. 7, FIG. 9, and FIG. 10, the battery cell 1 includes an isolating cover 500. The isolating cover 500 is located on a side of the wall portion 101 facing the inside of the shell 100, is provided with an isolating space 510 and a through-going hole 520, and covers a periphery of the mounting hole 102. The isolating space 510 is provided opposite to the mounting hole 102 and in communication with each other. The through-going hole 520 is in communication with the isolating space 510 and the inside of the shell 100. The isolating cover 500 is configured to space the sampling module 410 and the electrode assembly 200.

By providing the isolating cover 500, the sampling module 410 can be prevented from being in direct contact with the electrode assembly 200, thereby reducing the risk of short-circuit due to the contact of the detection sensor 400 with the electrode assembly 200. In addition, the provision of the isolating cover 500 can reduce the corrosion damage to the sampling module 410 by the electrode assembly 200. The isolating cover 500 also facilitates the reduction of contact between the electrolyte and the sampling module 410, thereby reducing the corrosion damage to the sampling module 410 by the electrolyte.

The sampling module 410 may obtain environment information inside the shell 100 through the through-going hole 520. Disposing the through-going hole 520 facilitates the sampling module 410 to quickly and accurately obtain environment information inside the shell 100. For example, a change in pressure or temperature inside the shell 100 may cause a corresponding change in the isolating space 510 through the through-going hole 520, and then the related environment information is detected by the sampling module 410. For another example, when a gas inside the shell 100 is generated, the gas may pass to the isolating space 510 and the mounting hole 102 through the through-going hole 520, and then be detected by the sampling module 410.

According to some embodiments of the present application, optionally, as shown in FIG. 7, FIG. 9, and FIG. 10, the isolating cover 500 is fixedly connected to the wall portion 101. Such configuration reduces the risk of destroying the positional relationship between the isolating cover 500 and the wall portion 101, improve the stability of the connection between the isolating cover 500 and the wall portion 101, and effectively perform a function of protecting the sampling module 410 by the isolating cover 500.

Alternatively, the battery cell 1 includes a plastic part 600 located on the electrode assembly 200 and the wall portion 101, and the isolating cover 500 is provided on the plastic part 600.

The isolating cover 500 is provided to be fixedly connected to the plastic part 600, facilitating assembly of the isolating cover 500.

Optionally, the plastic part 600 is of a plastic material. The plastic material facilitates forming of the plastic part 600.

Further, the plastic part 600 is of an isolating material, and may form isolation between the electrode assembly 200 and the wall portion 101, thereby limiting a current to directly flow from the electrode assembly 200 into the wall portion 101 or to directly flow from the wall portion 101 into the electrode assembly 200.

Optionally, the plastic part 600 and the isolating cover 500 are integrally injection-shaped. In such a way, the process flow of preparing the battery cell 1 can be reduced.

According to some embodiments of the present application, optionally, as shown in FIG. 6 and FIG. 7, the through-going hole 520 runs through a bottom of the isolating cover 500 and is provided opposite to the sampling module 410.

A change of the environment inside the shell 100 may cause a change of the environment around the sampling module 410 through the through-going hole 520. The bottom of the isolating cover 500 is closer to the inside of the shell 100. The through-going hole 520 is provided opposite to the sampling module 410, such that the sampling module 410 may face the inside of the shell 100. Such configuration facilitates the sampling module 410 to quickly and accurately obtain environment information inside the shell 100.

Further, the detection sensor 400 includes a gas sensor. The through-going hole 520 is provided opposite to the sampling module 410, such that the path in which the gas flows from the inside of the shell 100 to the mounting hole 102 can be reduced.

Optionally, a plurality of the through-going holes 520 are provided, and the plurality of the through-going holes 520 are arranged at intervals.

Specifically, the plurality of through-going holes 520 may be arranged in an array. For example, one part of the plurality of through-going holes 520 may be arranged in a circular array around the other part. For another example, the plurality of through-going holes 520 is arranged in a rectangular array.

By providing the plurality of through-going holes 520, synchronization between states of the environment inside the shell 100 and the environment around the sampling module 410 can be increased. For example, a change of a pressure, a temperature, or a gas inside the shell 100 can cause the environment around the sampling module 410 to quickly and correspondingly change through the plurality of through-going holes 520, and then related environment information is detected by the sampling module 410. This facilitates the sampling module 410 to quickly and accurately obtain environment information inside the shell 100.

According to some embodiments of the present application, optionally, as shown in FIG. 3, FIG. 4, and FIG. 6, the battery cell 1 further includes a circuit board 300, and the circuit board 300 is provided on a side of the wall portion 101 facing away from the inside of the shell 100. The detection sensor 400 includes a pin 401, the pin 401 is provided on a side of the encapsulation housing 430 facing away from the inside of the shell 100, and the sampling module 410 is connected to the circuit board 300 through the pin 401.

Specifically, the pin 401 may extend from the inside of the encapsulation housing 430 through the encapsulation housing 430 to a side of the encapsulation housing 430 facing away from the inside of the shell 100. The pin 401 may be connected to the sampling module 410 inside the encapsulation housing 430.

The circuit board 300 is provided on a side of the wall portion 101 facing away from the inside of the shell 100, to facilitate installation and removal of the circuit board 300. The wall portion 101 may prevent the circuit board 300 from being in contact with the electrode assembly 200 and the electrolyte, thereby reducing the risk of short circuit due to the contact of the circuit board 300 with the electrode assembly 200 and reducing the corrosion to the circuit board 300 by the electrode assembly 200 and the electrolyte.

Connecting to the circuit board 300 by providing the pin 401 can facilitate transferring, by the sampling module 410, the environment information inside the shell 100 to the outside of the shell 100.

Optionally, a side of the encapsulation housing 430 facing away from the inside of the shell 100 is provided in the mounting hole 102, and the circuit board 300 may cover the mounting hole 102 on the side of the wall portion 101 facing away from the inside of the shell 100. Such configuration facilitates the fixed connection of the circuit board 300 on the wall portion 101.

According to some embodiments of the present application, optionally, as shown in FIG. 5 and FIG. 6, the battery cell 1 further includes a processor 800. The processor 800 is provided on the circuit board 300 and is connected to the sampling module 410 through the pin 401.

The processor 800 is provided to connect to the sampling module 410 by the pin 401, and the processor 800 can process the environment information sampled by the detection sensor 400, enabling the intelligent battery cell 1. For example, the processor 800 may determine the gas composition and concentration, temperature, or gas pressure inside the shell 100 according to the environment information obtained by the detection sensor 400, to analyze the operating state of the battery cell 1.

The processor 800 may be an integrated circuit chip having a signal processing capability. The processor 800 may also be a general-purpose processor, a digital signal processor (DSP), an application-specific integrated circuit (ASIC), a field programmable gate array (FPGA), or other programmable logic devices, a discrete gate or transistor logic device, or a discrete hardware component. The general-purpose processor may be a microprocessor, or the processor may be any conventional processor or the like.

For example, the processor 800 is an MCU. Providing the processor 800 on the circuit board 300 can improve the stability of the connection between the processor 800 and the circuit board 300, thereby improving the stability of the connection between the processor 800 and the detection sensor 400.

According to some embodiments of the present application, optionally, as shown in FIG. 3, FIG. 4, and FIG. 6, the processor 800 is provided on a side of the circuit board 300 facing away from the inside of the shell 100.

Compared with the side of the circuit board 300 facing the inside of the shell 100, the space of the side of the circuit board 300 facing away from the inside of the shell 100 is relatively spacious. Providing the processor 800 on the side of the circuit board 300 facing away from the inside of the shell 100 facilitates the heat dissipation of the processor 800.

According to some embodiments of the present application, optionally, as shown in FIG. 6, the detection sensor 400 includes a conditioning module 420, and the conditioning module 420 and the sampling module 410 are provided on the same side of the circuit board 300, or on opposite sides of the circuit board 300.

The sampling module 410 may obtain the environment information inside the shell 100 and output a sampling signal corresponding to the environment information inside the shell 100. The sampling signal is usually an analog signal, and is not suitable for applications such as data collection, control processes, and performing calculation, display, reading, etc. The conditioning module 420 may be configured to convert a sampling signal into a digital signal, such that environment information inside the shell 100 can be analyzed and processed.

In addition, the sampling signal is usually a relatively small voltage, current, or change. The conditioning module 420 may include an amplification circuit. The amplification circuit may be configured to amplify the sampling signal before converting the sampling signal into a digital signal, to improve the precision when the sampling signal is converted into the digital signal.

Optionally, the conditioning module 420 may further include a filter circuit. The filter circuit may be configured to perform low-pass filtering on the sampling signal, to eliminate noise and prevent aliasing.

By providing the conditioning module 420 on the circuit board 300, the stability of the connection between the conditioning module 420 and the circuit board 300 can be improved, thereby improving the stability of the connection between the conditioning module 420 and the sampling module 410.

The conditioning module 420 and the sampling module 410 are provided on the circuit board 300 on the same side, facilitating the reduction of space occupied by the conditioning module 420 and the sampling module 410. The conditioning module 420 and the sampling module 410 are provided on the circuit board 300 opposite to each other, and the circuit board 300 may protect the conditioning module 420, to improve operating stability of the conditioning module 420.

According to some embodiments of the present application, optionally, as shown in FIG. 3, FIG. 4, and FIG. 6, the shell 100 includes a case 110 and an end cover 120, the case 110 is provided with an open end 111, the end cover 120 covers the open end 111, and the electrode assembly 200 is accommodated inside the case 110. The end cover 120 forms the wall portion 101. The mounting hole 102 is provided in the end cover 120.

The above opening 112 may be disposed at the open end 111. The mounting hole 102 is disposed in the end cover 120, facilitating blocking of the mounting hole 102.

The detection sensor 400 is provided in the end cover 120, thereby facilitating installation of the detection sensor 400. The detection sensor 400 may be installed on the end cover 120 after the end cover 120 is connected to the case 110. Alternatively, the detection sensor 400 may be installed on the end cover 120 before the end cover 120 is connected to the case 110.

In some other embodiments, the case 110 may form the wall portion 101. The mounting hole 102 may be provided in the case 110, for example, provided in a bottom wall of the case 110, and the bottom wall of the case 110 is provided opposite to the open end 111. Such configuration can increase the mountable area of the detection sensor 400.

According to some embodiments of the present application, optionally, as shown in FIG. 3 and FIG. 4, the battery cell 1 includes two electrode terminal posts 900, the two electrode terminal posts 900 are arranged at an interval, and the two electrode terminal posts 900 penetrate the end cover 120. The circuit board 300 is electrically connected to the two electrode terminal posts 900, so that the electrode assembly 200 supplies power to the circuit board 300 through the two electrode terminal posts 900.

The end cover 120 may have the function of positioning the two electrode terminal posts 900. The two electrode terminal posts 900 can be fixed with respect to the end cover 120.

Specifically, one end of the electrode terminal post 900 is provided toward the inside of the shell 100, and may be configured to be electrically connected to the electrode assembly 200 provided inside the shell 100. The other end of the electrode terminal post 900 is provided toward the outside of the shell 100 and may be connected to the outside and the circuit board 300, such that the electrode assembly 200 may supply power to the outside and the circuit board 300 through the electrode terminal post 900, receptively.

Further, the electrode assembly 200 may be charged by the electrode terminal post 900.

Further, the two electrode terminal posts 900 may be respectively a positive electrode terminal post and a negative electrode terminal post.

According to some embodiments of the present application, optionally, the detection sensor 400 is a gas pressure sensor, a gas sensor, or a temperature sensor.

The gas pressure sensor may be configured to detect gas pressure inside the shell 100. During the operation of the battery cell 1, the gas pressure changes. For example, the gas pressure quickly increases due to generation of gas inside the shell 100 or the temperature increase. The detection sensor 400 is provided as a gas pressure sensor, such that the gas pressure inside the shell 100 can be detected, thereby facilitating management of the operating state of the battery cell 1.

The gas sensor may be configured to detect a gas composition inside the shell 100, for example, detect H₂, CO₂, CO, or an organic gas. Some gases, for example, one or more of H₂, CO, CO and an organic gas may be generated in an operation process of the battery cell 1. The detection sensor 400 is provided as a gas sensor, such that the type and/ concentration of one or more gases inside the shell 100 can be detected, thereby facilitating management of the operating state of the battery cell 1.

The temperature sensor may be configured to detect the temperature inside the shell 100. During the operation of the battery cell 1, the temperature changes, for example, the temperature increases. The detection sensor 400 is provided as a temperature sensor, such that the temperature inside the shell 100 can be detected, thereby facilitating management of the operating state of the battery cell 1.

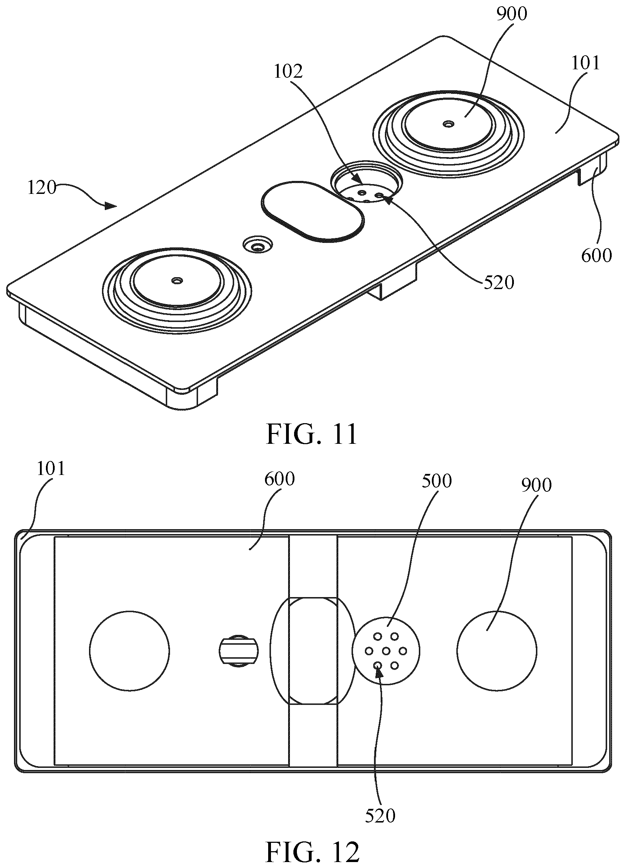

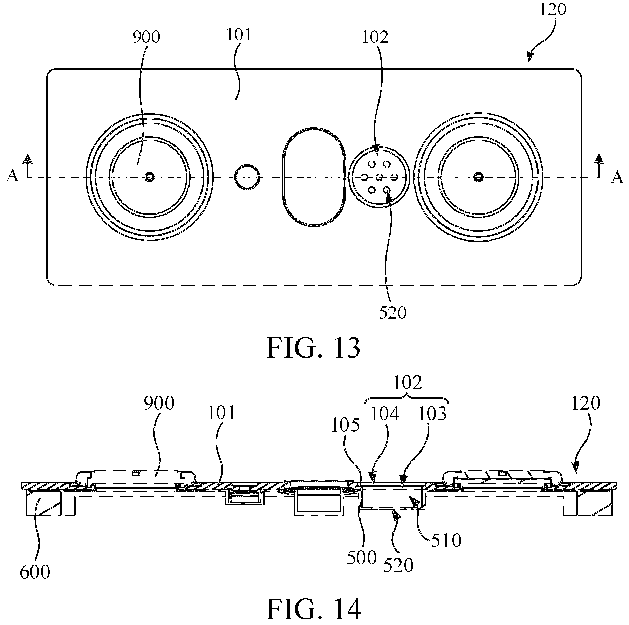

Optionally, the shape of the encapsulation housing 430 matches the shape of the mounting hole 102, such that the mounting hole 102 is configured to mount and position the encapsulation housing 430. For example, as shown in FIG. 11 to FIG. 14, both the encapsulation housing 430 and the mounting hole 102 are of a circle or ellipses shape. For another example, the encapsulation housing 430 and the mounting hole 102 are both of a rectangle and a two semi-circle combined shape. Two opposite sides of the rectangle and the diameter of the two semi-circles are equal and are connected.

According to some embodiments of the present application, optionally, as shown in FIG. 3 to FIG. 14, the battery cell 1 includes a shell 100, an electrode assembly 200, and a detection sensor 400. The shell 100 includes a wall portion 101, the wall portion 101 being provided with a mounting hole 102 is in communication with inside and outside the shell 100. The shell 100 includes a case 110 and an end cover 120, the case 110 is provided with an open end 111, the end cover 120 covers the open end 111, and the electrode assembly 200 is accommodated inside the case 110. The case 110 and/or the end cover 120 form a wall portion 101, and correspondingly, a mounting hole 102 is disposed in the case 110 and/or the end cover 120. The electrode assembly 200 is accommodated inside the shell 100. The detection sensor 400 includes a sampling module 410 and an encapsulation housing 430 configured to encapsulate the sampling module 410, at least a part of the encapsulation housing 430 being inserted into the mounting hole 102 and blocking the mounting hole 102. The sampling module 410 is configured to sample an environment inside the shell 100. The encapsulation housing 430 is provided with a through-hole 431 on a side facing the inside of the shell 100, and at least a part of the sampling module 410 is exposed through the through-hole 431, to sample the environment inside the shell 100. The mounting hole 102 includes a first hole section 103 and a second hole section 104 in communication with each other, the first hole section 103 is closer to the inside of the shell 100 than the second hole section 104, and a support table surface 105 facing the second hole section 104 is formed at the connection between the first hole section 103 and the second hole section 104. At least a part of the encapsulation housing 430 is provided at the second hole section 104 and supported by the support table surface 105. The encapsulation housing 430 includes an insertion portion 432 and a flange portion 433 protruding from an outer periphery of the insertion portion 432, the flange portion 433 is supported by the support table surface 105, and at least a part of the insertion portion 432 is inserted into the first hole section 103. The battery cell 1 includes an isolating cover 500. The isolating cover 500 is located on a side of the wall portion 101 facing the inside of the shell 100, is provided with an isolating space 510 and a through-going hole 520, and covers a periphery of the mounting hole 102. The isolating space 510 is provided opposite to the mounting hole 102 and communicating with each other. The through-going hole 520 is in communication with the isolating space 510 and the inside of the shell 100. The isolating cover 500 is fixedly connected to the wall portion 101. Alternatively, the battery cell 1 includes a plastic part 600 located on the electrode assembly 200 and the wall portion 101, and the isolating cover 500 is provided on the plastic part 600. The through-going hole 520 runs through a bottom of the isolating cover 500 and is provided opposite to the sampling module 410. A plurality of the through-going holes 520 are provided, and the plurality of the through-going holes 520 are arranged at intervals. The battery cell 1 further includes a circuit board 300, and the circuit board 300 is provided on a side of the wall portion 101 facing away from the inside of the shell 100. The detection sensor 400 includes a pin 401, the pin 401 is provided on a side of the encapsulation housing 430 facing away from the inside of the shell 100, and the sampling module 410 is connected to the circuit board 300 through the pin 401. The battery cell 1 further includes a processor 800. The processor 800 is provided on the circuit board 300 and is connected to the sampling module 410 through the pin 401. The processor 800 is provided on a side of the circuit board 300 facing away from the inside of the shell 100. The detection sensor 400 includes a conditioning module 420, and the conditioning module 420 and the sampling module 410 are provided on the same side of the circuit board 300, or on opposite sides of the circuit board 300. The battery cell 1 includes two electrode terminal posts 900, the two electrode terminal posts 900 are arranged at an interval, and the two electrode terminal posts 900 penetrate the end cover 120. The circuit board 300 is electrically connected to the two electrode terminal posts 900, so that the electrode assembly 200 supplies power to the circuit board 300 through the two electrode terminal posts 900. The detection sensor 400 is a gas pressure sensor, a gas sensor, or a temperature sensor.

According to some embodiments of the present application, as shown in FIG. 2, the battery 100a includes the above battery cell 1. By such configuration, the volumetric energy density of the battery cell 1 can be increased, to increase the volumetric energy density of the battery 100a.

According to some embodiments of the present application, as shown in FIG. 1, the electrical device includes the above battery 100a. By such configuration, the volumetric energy density of the battery 100a can be improved, thereby improving the endurance of the electrical device.

In conclusion, according to the embodiments of the present application, the space occupied by the detection sensor 400 inside the shell 100 can be reduced, to provide more space for the shell 100 to accommodate the electrode assembly 200, thereby improving the space utilization inside the shell 100, thereby improving the volumetric energy density of the battery cell 1, and enabling the structure of the battery cell 1 to be more compact. By providing the detection sensor 400 at least partially outside the shell 100 or in the mounting hole 102, a spacing distance between the sampling module 410 and the electrode assembly 200 can be increased, such that the probability of corrosion of the sampling module 410 by the electrode assembly 200 is reduced, and the risk of a short circuit caused by contact between the sampling module 410 and the electrode assembly 200 is reduced.

Finally, it should be noted that: the above embodiments are merely used for illustrating rather than limiting the technical solutions of the present application. Although this invention is described in detail with reference to the foregoing embodiments, it should be appreciated by a person skilled in the art that, modifications may still be made to the technical solutions described in the foregoing embodiments, or equivalent replacements may be made to the some or all of the technical features; and these modifications or replacements will not cause the essence of corresponding technical solutions to depart from the scope of the technical solutions in the embodiments of this invention, and should fall within the scope of the claims and the description of the present application. Especially, as long as there is no structural conflict, the various technical features mentioned in each embodiment can be combined in any way. The present application is not limited to the particular embodiments disclosed herein, but includes all technical solutions that fall within the scope of the claims.

## Claims

1. A battery cell, comprising
a shell comprising a wall portion, the wall portion being provided with a mounting hole in communication with inside and outside of the shell;
an electrode assembly accommodated inside the shell;
a detection sensor, comprising a sampling module and an encapsulation housing configured to encapsulate the sampling module, at least a part of the encapsulation housing being inserted into the mounting hole and blocking the mounting hole, and the sampling module being configured to sample the environment inside the shell.

2. The battery cell according to claim 1, wherein
the encapsulation housing is provided with a through-hole on a side facing the inside of the shell, and at least a part of the sampling module is exposed through the through-hole, to sample the environment inside the shell.

3. The battery cell according to claim 1 or 2, wherein
the mounting hole comprises a first hole section and a second hole section in communication with each other, the first hole section being closer to the inside of the shell than the second hole section, and a support table surface facing the second hole section being formed at the connection between the first hole section and the second hole section; and at least a part of the encapsulation housing is provided at the second hole section and supported by the support table surface.

4. The battery cell according to claim 3, wherein
the encapsulation housing comprises an insertion portion and a flange portion protruding from an outer periphery of the insertion portion, the flange portion being supported by the support table surface, and at least a part of the insertion portion being inserted into the first hole section.

5. The battery cell according to any one of claims 1-4, wherein
the battery cell comprises an isolating cover, the isolating cover being located on a side of the wall portion facing the inside of the shell, provided with an isolating space and a through-going hole, and covering a periphery of the mounting hole, the isolating space and the mounting hole being provided opposite to and in communication with each other, and the through-going hole being in communication with the isolating space and the inside of the shell.

6. The battery cell according to claim 5, wherein
the isolating cover is fixedly connected to the wall portion; or
the battery cell comprises a plastic part located on the electrode assembly and the wall portion, and the isolating cover is provided on the plastic part.

7. The battery cell according to claim 5 or 6, wherein
the through-going hole runs through a bottom of the isolating cover and is provided opposite to the sampling module; and/or, a plurality of the through-going holes are provided, and the plurality of the through-going holes are arranged at intervals.

8. The battery cell according to any one of claims 1-7, wherein
the battery cell further comprises a circuit board, the circuit board being provided on a side of the wall portion facing away from the inside of the shell; and the detection sensor comprises a pin, the pin being provided on a side of the encapsulation housing facing away from the inside of the shell, and the sampling module being connected to the circuit board through the pin.

9. The battery cell according to claim 8, wherein
the battery cell further comprises a processor, the processor being provided on the circuit board and connected to the sampling module through the pin.

10. The battery cell according to claim 9, wherein
the processor is provided on a side of the circuit board facing away from the inside of the shell.

11. The battery cell according to any one of claims 8-10, wherein
the detection sensor comprises a conditioning module, the conditioning module and the sampling module being provided on the same side of the circuit board, or on opposite sides of the circuit board.

12. The battery cell according to any one of claims 8-11, wherein
the shell comprises a case and an end cover, the case being provided with an open end, the end cover covering the open end, the electrode assembly being accommodated inside the case, the end cover forming the wall portion, and the mounting hole being provided in the end cover.

13. The battery cell according to claim 12, wherein
the battery cell comprises two electrode terminal posts, the two electrode terminal posts being arranged at an interval, and penetrating the end cover; and the circuit board is electrically connected to the two electrode terminal posts, such that the electrode assembly supplies power to the circuit board through the two electrode terminal posts.

14. The battery cell according to any one of claims 1-13, wherein
the detection sensor is a gas pressure sensor, a gas sensor, or a temperature sensor.

15. A battery, comprising a battery cell according to any one of claims 1-14.

16. An electrical device, comprising a battery according to claim 15.
